# EUROPEAN PATENT APPLICATION

(11) **EP 4 465 372 A1**
(43) Date of publication of application: **20.11.2024**
(21) Application number: 23305793.4
(22) Date of filing: 17.05.2023
(51) Int. Cl.: H01M 4/04, H01M 4/66

(54) **ELECTRODE SHEET FOR A BATTERY CELL AND ASSOCIATED MANUFACTURING PROCESS**

(71) Applicant: Automotive Cells Company SE, 33520 Bruges (FR)
(72) Inventor: ZIER, Martin, 33110 LE BOUSCAT (FR); BEN ALI, Imed Eddine, 33100 BORDEAUX (FR); SINGH, Laura, 33200 BORDEAUX (FR); VILLARDI DE OLIVEIRA, Caroline, 33700 MERIGNAC (FR)
(74) Representative: Lavoix

(57) **Abstract**

The intermediate current collector (6) comprises:
- a metallic substrate conductive foil (12) extending in a longitudinal direction (L);
- at least one conductive carbon primer coating (14) covering at least partially the metallic substrate foil (12) in the longitudinal direction (L); and
- an electrically isolating coating (16) applied in the longitudinal direction (L) on the metallic substrate foil (12) on both edges of the conductive carbon primer coating (14), the isolation coatings (16) framing the conductive carbon primer coating (14) in a transversal direction (T) perpendicular to the longitudinal direction (L).

The conductive carbon primer coating (14) is free of any active material.

## Description

The present invention concerns an electrode sheet for a battery cell and an associated manufacturing process.

The electrode sheet is used in a battery, for example in a battery for an electric or hybrid vehicle. A "battery" is a plurality of electrochemical cells electrically connected to each other.

Each cell comprises a positive electrode sheet, known as cathode, a negative electrode sheet, known as anode and a separator separating the two electrodes sheets, each cell being filled with an electrolyte.

Each electrode sheet comprises an active material for the purpose of accommodating the electrochemically active species and a current collector to conduct the electric current to the terminals of the cell.

The current collector is made with an intermediate current collector comprising:
- a metallic substrate conductive foil extending in a longitudinal direction;
- at least one conductive carbon primer coating covering at least partially the metallic substrate foil in the longitudinal direction; and
- an electrically isolating coating applied in the longitudinal direction on the metallic substrate foil on both edges of (each of) the conductive carbon primer coating(s), the isolation coatings framing the conductive carbon primer coating in a transversal direction perpendicular to the longitudinal direction.

To increase energy density, space in the battery cell is optimised. Thus, the electrodes sheets are very close to each other inducing a certain risk of contact that needs to be controlled. Additional protection mechanisms can be implemented so as to improve safety. Therefore, a ceramic layer is presented in CN109065818 A, placed along the cathode active material in order to avoid a cell short circuit.

The described electrode sheet comprises a foil coated with the active material and a ceramic layer on the edges of the active material. The edge of the ceramic layer and the edge of the active material are in contact. The active material and the ceramic layer are applied preferably simultaneously. They are applied by a wet process which uses NMP (N-Methyl-pyrrolidone) which is a danger for health and the environment.

However, in this configuration, the deposition of both, the active material and the ceramic layer requires a wet process which is not desired in electrode sheet manufacturing.

One aim of the invention is to reduce as much as possible the drying steps of the electrode sheet manufacturing process.

To this aim, the subject matter of the invention is an intermediate current collector of the above mentioned type, characterized in that the conductive carbon primer coating is free of any active material.

The intermediate current collector according to the invention may comprise one or more of the following feature(s), taken alone, or according to any technical feasible combination:
- the metallic substrate foil is a metal, a metal alloy or composite based film, in particular an aluminum film;
- the conductive carbon primer coating comprises at least a type of conductive carbon and at least one binder;
- the isolation coatings comprise at least one binder polymer;
- the isolation coatings consist of one or more polymers only;
- the thickness of each insulation coating is thinner than thickness of the conductive carbon primer coating; and
- the intermediate current collector is arranged in a coil with a rotational axis parallel to the transversal direction.

The invention also concerns an intermediate electrode comprising:
- a intermediate current collector as above; and
- an active layer comprising active material, the active layer covering the conductive carbon primer coating in the longitudinal direction.

The intermediate electrode according to the invention may comprise the following feature:
- the active layer comprises at least one binder.

The invention also concerns an electrode sheet made with a intermediate electrode as above, wherein the intermediate electrode is cut along a longitudinal section plan perpendicular to the transversal direction, forming the electrode sheet.

The invention also concerns a cell comprising at least one electrode sheet as above and an electrolyte.

The invention also concerns a method for producing an intermediate current collector, comprising the steps of:
- coating in a wet process at least partially a metallic substrate foil with a carbon slurry and with an isolation slurry, said isolation slurry framing the carbon slurry, using a gravure roller process in order to obtain a coated metallic substrate foil; then
- drying the coated metallic substrate foil, forming the intermediate current collector.

The invention also concerns a method for producing an intermediate electrode, comprising the steps of:
- producing an intermediate current collector as above; then
- coating the intermediate current collector with an active layer using a dry lamination process without using any solvent, in order to obtain the intermediate electrode.

The invention also concerns a method for producing an electrode sheet, comprising the steps of:
- producing an intermediate electrode as above; then
- cutting the intermediate electrode along a longitudinal section plan perpendicular to the transversal direction, forming the electrode sheet.

The method for producing an electrode sheet according to the invention may comprise the following feature:
- the intermediate electrode is created immediately without temporarily winding the electrode active layer onto a coil.

The invention will be better understood, based on the following description, made in reference to the drawings, in which:
- figure 1 is a schematic representation of a cross-section of an intermediate current collector in perspective view according to the invention;
- figure 2 is a schematic representation of a cross-section of an intermediate electrode in perspective view according to the invention;
- figure 3 is a schematic top view of an electrode sheet after notching according to the invention; and
- figure 4 is a schematic representation of a method for producing an intermediate electrode according to the invention.

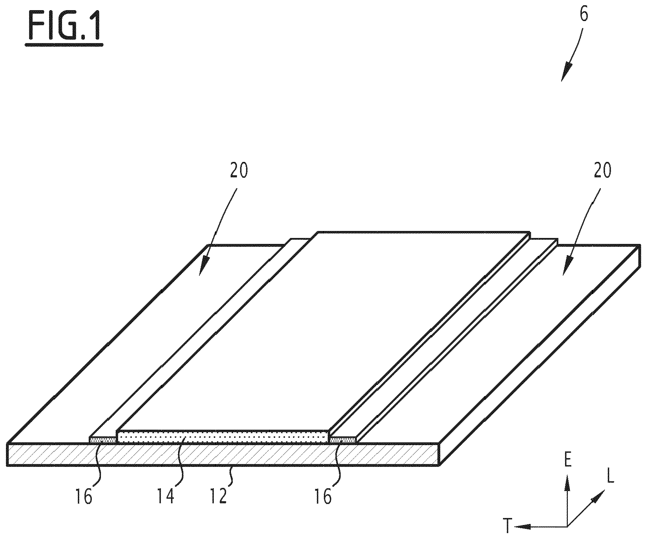

An intermediate current collector 6 according to the invention is represented in figure 1.

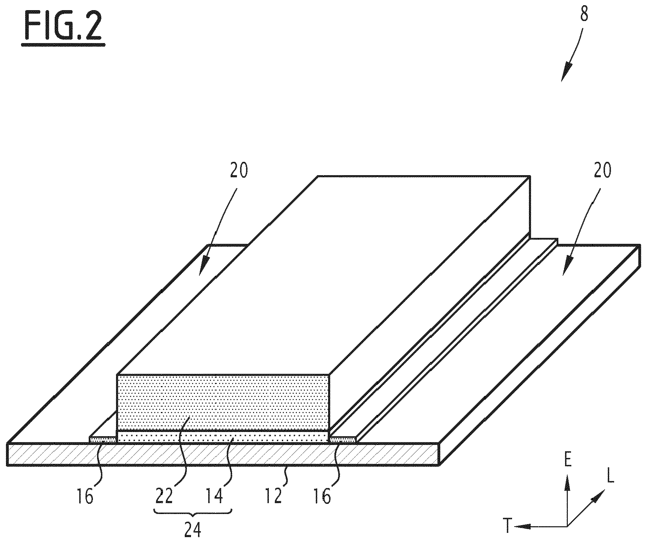

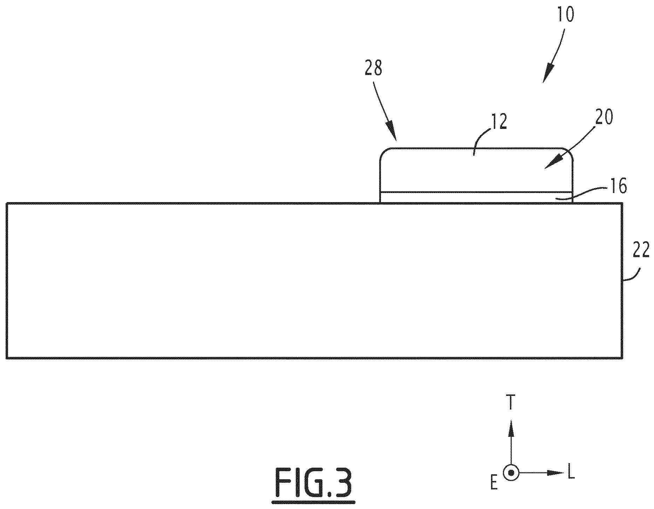

The intermediate current collector 6 is used to make an intermediate electrode 8 represented in figure 2. The intermediate electrode 8 is cut to make an electrode sheet 10, as shown in figure 3. The electrode sheet 10 is used in a battery's cell in combination with another electrode sheet and an electrolyte.

The intermediate current collector 6 comprises a metallic substrate foil 12 coated with a conductive carbon primer coating 14 and two lateral isolation coatings 16. The intermediate current collector 6 is a strip intended to be rolled up to be stored and transported.

The metallic substrate foil 12 is a thin oblong film extending in a longitudinal direction L and a transversal direction T. Figure 1 represents the metallic substrate foil 12 in a cross-section defined by a section plan perpendicular to the longitudinal direction L. The metallic substrate foil 12 has a length along the longitudinal direction L up to 20 km, a width along the transversal direction T up to 1.6 m and a thickness along an elevation direction E, perpendicular to the transversal direction T and the longitudinal direction L, between 10 and 25 µm.

The metallic substrate foil 12 is made from an electronic conducting material for example a composite or a metal. In particular, the metallic substrate foil can be made in steel, nickel, copper, aluminum and alloys thereof.

In the case of the making of a cathode, the electrode sheet receiving positively charged cations, the metallic substrate foil 12 is preferably a bare aluminum film.

In the case of the making of an anode, the electrode sheet receiving negatively charged anions, the metallic substrate foil 12 is preferably a bare copper film.

The conductive carbon primer coating 14 extends in the longitudinal direction L. The conductive carbon primer coating 14 presents a thickness along the elevation direction between 0.5 µm and 5 µm, advantageously between 1 µm and 2 µm. The width of the conductive carbon primer coating 14 depends on the electrode sheet dimensions.

The width of the conductive carbon primer coating 14 along the transversal direction T is smaller than the width of the metallic substrate foil 12 along the transversal direction T.

In a specific embodiment, the metallic substrate foil 12 is coated with multiple conductive carbon primer coatings in order to make several electrode sheets 10.

For example, ten conductive carbon primer coatings are coated on the metallic substrate foil 12 for manufacturing ten electrode sheets 10.

The conductive carbon primer coating 14 is advantageously coated on the metallic substrate foil 12 on the whole length, along the longitudinal direction L, of the metallic substrate foil 12.

In another embodiment, the extremity of the metallic substrate foil 12 in the longitudinal direction L is bare.

The conductive carbon primer coating 14 comprises no active material and in a preferred embodiment, the conductive carbon primer coating 14 comprises conductive carbon and a binder. The conductive carbon is for example carbon black or carbon nanotubes. For example, the binder is a polymer, such as polyacrylate, polyolefin, polymethyl methacrylate (PMMA), polyvinylidene fluoride (PvdF) or any of their derivatives.

On both edges along the transversal direction T, the metallic substrate foil 12 is coated by two isolation coatings 16.

Each isolation coating 16 presents a thickness along the elevation direction, which is thinner than the thickness of the conductive carbon primer coating 14. Preferably, the thickness of each isolation coating 16 is less than 95% of the thickness of the conductive carbon primer coating 14 but more than 50%. For example, the thickness of each isolation coating 16 is within the range from 0.5 µm to 1.5 µm.

Each isolation coating 16 is in contact with the conductive carbon primer coating 14. The width of the conductive carbon primer coating 14 and the two isolation coatings 16 is smaller than the width of the metallic substrate foil 12 along the transversal direction T. The width along the elevation direction E of the isolation coating 16 is between 1 mm and 20 mm, preferably between 5 and 10 mm.

In another embodiment, each isolation coating 16 is spaced, in the transversal direction T, from the conductive carbon primer coating 14. For example, the distance along the transversal direction T between the isolation coating 16 and the conductive primer coating 14 is 0.5 mm.

The isolation coatings 16 and the conductive carbon primer coating 14 leave a stripe 20 of bare metallic substrate foil 12 on one side of each isolation coating 16.

The isolation coatings 16 are advantageously coated on the metallic substrate foil 12 on the whole length, along the longitudinal direction L, of the metallic substrate foil 12.

Each isolation coating 16 is a non-conducting electric isolator. It comprises a binder, for example a polymer. Preferably, the isolation coating 16 consists of one or more non-conducting polymers only. In particular, the isolation coating is free of ceramic particles.

In another embodiment, the isolation coatings 16 comprises only the binder which is one or more polymers.

In one embodiment, the binder of the isolation coatings 16 is the same as the one of the conductive carbon primer coating 14.

For example, the polymer of the isolation coating 16 is belonging to at least one of the polymer families of Polyurethane, Silicones, Polyacrylate, Polyolefin, Polymethyl methacrylate (PMMA), Polyvinylidene fluoride (PvdF) and other fluorinated polymers, Polyimide, Polysulfides, Epoxies, Cyanoacrylates and UV curable polymers or any of their derivatives.

The intermediate electrode 8 comprises the intermediate current collector 6 coated with an active layer 22, as represented in figure 2.

The active layer 22 is positioned on the conductive carbon primer coating 14 only and have the same length and width along the longitudinal direction L and the transversal direction T. So the active layer 22 is not coated on the isolation coatings 16.

The active layer 22 comprises an active material, a binder and optionally a conducting additive. The active material comprises for example layered oxides such as lithium nickel-manganese-cobalt oxides NMC, lithium cobalt oxides LCO, lithium nickel-cobalt-aluminium oxides NCA, or polyanionic oxides such as lithium iron phosphate LFP, lithium iron-manganese phosphate LFMP or spinels such as lithium nickel-manganese oxide LNMO or lithium sulfide or mixtures thereof.

The binder is advantageously a polymer such as polytetrafluoroethylene (PTFE), polyvinylidene fluoride (PVDF), poly(ethylene oxide) (PEO), polyethylene (PE) or mixtures thereof.

In one embodiment, the binder in the active layer 22 is similar to the one in the conductive carbon primer coating 14. The binders bind the active layer 22 to the conductive carbon primer coating 14

The binder softens under pressure and temperature and acts like a glue between the conductive carbon primer coating 14 and the active layer 22. The binder creates a link, preferably a mechanical, optionally a chemical link between the conductive carbon primer coating 14 and the active layer 22. Thus, the binder secures the adhesion between the conductive carbon primer coating 14 and the active layer 22. The active layer 22 and the conductive carbon primer coating 14 form an active coating 24.

In an embodiment, as shown in figure 2, the thickness of the active layer 22 along the elevation direction E is greater than the thickness of the conductive carbon primer coating 14. For example, the active layer 22 has a thickness along the elevation direction E between 20 µm and 200 µm, preferably between 40 µm and 80 µm.

The electrode sheet 10 results in the cutting of the intermediate electrode 8 along a longitudinal section plan centered on the intermediate electrode 8 and perpendicular to the transversal direction T. The isolation coating 16 and the metallic substrate foil 12 are also cut out within the isolation coating 16 with the exception of a tab 28. Once cut, the intermediate current collector 6 forms a current collector. Similarly, once cut, the intermediate electrode 8 forms the electrode sheet 10 which is used in a cell.

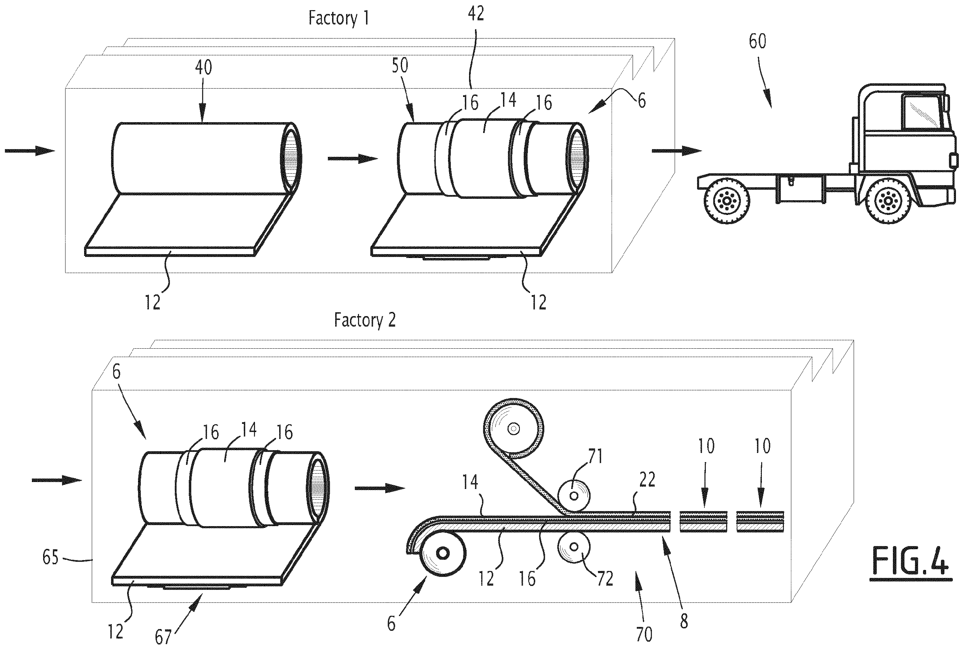

A method for producing an intermediate electrode 8 is now described, as illustrated in figure 4.

A first step 40 corresponds to the reception of the metallic substrate foil 12 in the form of a coil, in a first factory 42.

Then in a second step 50, the metallic substrate foil 12 is coated in a wet process using a gravure roller process. The gravure roller process is a process using one gravure cylinder to apply a slurry on a foil.

Simultaneously, a carbon slurry and an isolation slurry are applied to the metallic substrate foil 12 in order to obtain a coated metallic substrate foil. The isolation slurry is coated at the edge of the carbon slurry using a similar gravure roller process.

The carbon slurry comprises conductive carbon, a binder and a solvent. The conductive carbon and the binder are intended to form the conductive carbon primer coating 14. The solvent is for example NMP (N-Methyl-pyrrolidone). In another embodiment, the solvent used is water.

The slurry of the isolating edge coating consist of an electrically non-conducting polymer and a solvent. The solvent can be the same one as the one of the carbon slurry.

The gravure cylinder comprises imprint holes to hold slurry that are pressed against the metallic substrate foil 12, as the gravure cylinder rotates. The metallic substrate foil 12 is rotated in the other way round using an impression cylinder.

The liquid part of the coatings is evaporated, forming the intermediate current collector 6 without solvent. The carbon slurry forms the conductive carbon primer coating 14 and the isolation slurry forms the isolation coating 16. The binders reacts at the drying temperature binding the conductive carbon primer coating 14 and the isolation coating 16 to the metallic substrate foil 12. The solvent evaporates during the drying. No pressure is applied during drying. The drying temperatures are corresponding to the solvent used. For example, for water the drying temperature is between 50°C and 120°C, for NMP between 80°C and 150°C.

In another embodiment, the methods used are a slot-die process.

In another embodiment, the coating of the carbon slurry and the isolation slurry are spaced over time. The solvent of the carbon slurry and the isolation slurry are different.

The process is a "roll-to-roll" process, meaning that the process of manufacturing the intermediate current collector 6 is carried out continuously, starting from rolls of metallic substrate foil 12, which are unrolled in order to deposit the conductive carbon primer coating 14 and the isolation coatings 16 and then rewound at the end of the line.

In a third step 60, the intermediate current collector 6 is transported to another factory 65 to make the intermediate electrode 8 and the electrode sheet 10.

The intermediate current collector 6 is in the form of coils during transportation and stocking and is unrolled for the making of the intermediate electrode 8 in step 67 in the second factory 65.

In step 70, the intermediate current collector 6 is unrolled and is coated using a dry process with an active layer 22, without using any solvent as shown on figure 4. The active layer 22 is coated on the conductive carbon primer coating 14. The method used is a lamination process using heat and pressure.

The active layer 22 and the intermediate current collector 6 are pressed together using two rotating cylinders 71, 72. The place between the two cylinders where the active layer 22 and the intermediate current collector 6 are pressed against each other is also heated. At the output of the cylinders, the intermediate current collector 6 and the active layer 22 form the intermediate electrode 8, the binder of the conductive carbon primer coating 14 and the eventual binder of the active layer 22 binding the active layer 22 and the conductive carbon primer coating 14 together. For example, the temperature is between 50°C and 150°C.

The intermediate electrode 8 is not rolled up to form a coil. On the contrary, the intermediate electrode 8 is "in-roll" or "in-operando" cut to produce the electrode sheets, without rolling up of the intermediate electrode. The intermediate current collector 6 is covered with the active layer 22 and then cut to form the electrode sheets on the same production line during the same run of the intermediate current collector.

No further treatment or drying is required.

With this process, there is no need for an intermediate winding of the electrode sheet and subsequent transfer process. This provides space saving, cost saving and time saving. Also, the risk of losing quality due to winding of the intermediate electrode is eliminated. In another embodiment, not shown in figure 4, the conductive carbon primer coating 14, the isolation coatings 16 and the active layer 22 are coated on both sides of the metallic substrate foil 12.

The first factory 42 produces the intermediate current collector 6, using a wet process allowing only one drying step. The second factory 65 is only using a dry process to produce the intermediate electrode 8 and the electrode sheets with the intermediate current collector 6. This allows the protection of the active material by preventing any interaction between a solvent and the active material. The factories are also specialized only in a dry process or a wet process increasing the productivity of the whole process.

This method allows the isolation coating 16 to be coated before the lamination ensuring durable electrode sheets while keeping a simple, faster and energy saving process of fabrication.

The conductive carbon primer coating 14 comprising conductive carbon allows a good adhesion between the intermediate current collector 6 and the active material while maintaining a high conductivity between the active material and the intermediate current collector 6.

The polymer used for the isolation coating 16 is both an electrically insulating material and has a good resistance at a high temperature. The isolation coating 16 withstands well the drying steps and the lamination process at a high temperature.

Since the isolation coating 16 is made of polymer only without ceramic, there is less abrasion of separator during battery life and fewer cracks during manipulation.

The thickness of the insulation coating 16 being thinner than thickness of the conductive carbon primer coating 14, the quality of the coated substrate film roll is increased. In particular, there is no bulge on the roller. The bulges result of piling up elevated thickness of the insulating coating with each layer of film leading to an overstretching of the insulation part just until a cracking of the substrate occurs. The effect is also known as tin-canning.

The metallic substrate foil 12 and the intermediate current collector 6 are easily transportable and storable because they can be rolled in form of a coil.

The process of the lamination involves a temperature high enough to allow the melting of the binders binding the different parts together. The temperature of the drying is also high enough to allow the evaporation of the solvents.

## Claims

1. Intermediate current collector (6) comprising:
- a metallic substrate conductive foil (12) extending in a longitudinal direction (L);
- at least one conductive carbon primer coating (14) covering at least partially the metallic substrate foil (12) in the longitudinal direction (L); and
- an electrically isolating coating (16) applied in the longitudinal direction (L) on the metallic substrate foil (12) on both edges of (each of) the conductive carbon primer coating(s) (14), the isolation coatings (16) framing the conductive carbon primer coating (14) in a transversal direction (T) perpendicular to the longitudinal direction (L),
**characterized in that** the conductive carbon primer coating (14) is free of any active material.

2. Intermediate current collector (6) according to any one of the preceding claims, wherein the metallic substrate foil (12) is a metal, a metal alloy or composite based film, in particular an aluminium film.

3. Intermediate current collector (6) according to any one of the preceding claims, wherein the conductive carbon primer coating (14) comprises at least a type of conductive carbon and at least one binder.

4. Intermediate current collector (6) according to any one of the preceding claims, wherein the isolation coatings (16) comprise at least one binder polymer.

5. Intermediate current collector (6) according to claim 4, wherein the isolation coatings (16) consist of one or more polymers only.

6. Intermediate current collector (6) according to any one of the preceding claims, wherein the thickness of each insulation coating (16) is thinner than thickness of the conductive carbon primer coating (14).

7. Intermediate current collector (6) according to any one of the preceding claims, wherein the intermediate current collector (6) is arranged in a coil with a rotational axis parallel to the transversal direction (T).

8. Intermediate electrode (8) comprising:
- an intermediate current collector (6) according to any one of claims from 1 to 7; and
- an active layer (22) comprising active material, the active layer (22) covering the conductive carbon primer coating (14) in the longitudinal direction (L).

9. Intermediate electrode (8) according to claim 8, wherein the active layer (22) comprises at least one binder.

10. Electrode sheet (10) made with a intermediate electrode (8) according to any one of claims from 8 to 9, wherein the intermediate electrode (8) is cut along a longitudinal section plan perpendicular to the transversal direction (T), forming the electrode sheet (10).

11. Cell comprising at least one electrode sheet (10) according to claim 10 and an electrolyte.

12. Method for producing an intermediate current collector (6) according to any one of claims from 1 to 7, comprising the steps of:
- coating in a wet process at least partially a metallic substrate foil (12) with a carbon slurry and with an isolation slurry, said isolation slurry framing the carbon slurry, using a gravure roller process in order to obtain a coated metallic substrate foil; then
- drying the coated metallic substrate foil, forming the intermediate current collector (6).

13. Method for producing an intermediate electrode (8), comprising the steps of:
- producing an intermediate current collector (6) according to claim 12; then
- coating the intermediate current collector (6) with an active layer (22) using a dry lamination process without using any solvent, in order to obtain the intermediate electrode (8).

14. Method for producing an electrode sheet (10), comprising the steps of:
- producing an intermediate electrode (8) according to claim 13; then
- cutting the intermediate electrode (8) along a longitudinal section plan perpendicular to the transversal direction (T), forming the electrode sheet.

15. Method according to claim 14 for producing an electrode sheet (10), wherein the intermediate electrode (8) is created immediately without temporarily winding the electrode active layer (22) onto a coil.
